(19) Europäisches Patentamt / European Patent Office / Office européen des brevets

(11) **EP 3 396 815 A1**

(12) **EUROPÄISCHE PATENTANMELDUNG**

(43) Veröffentlichungstag:
**31.10.2018 Patentblatt 2018/44**

(51) Int Cl.:
*H02K 3/28 (2006.01)*    *H02K 1/16 (2006.01)*

(21) Anmeldenummer: **17168384.0**

(22) Anmeldetag: **27.04.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Siemens Aktiengesellschaft 80333 München (DE)**

(72) Erfinder:
• **Centner, Matthias 10555 Berlin (DE)**
• **Lang, Matthias 13158 Berlin (DE)**
• **Strüver, Sebastian 10585 Berlin (DE)**

(54) **STATOR FÜR EINE ELEKTRISCHE ROTIERENDE MASCHINE MIT REDUNDANTEN WICKLUNGSSYSTEMEN**

(57) Die Erfindung betrifft einen Stator (8) für eine elektrische rotierende Maschine (2), wobei der Stator (8) Statornuten (22) aufweist, in denen eine Statorwicklung (20) mit redundanten und zumindest dreiphasigen Wicklungssystemen (U1,V1, W1; U2,V2,W2) verlegt ist. Um, im Vergleich zum Stand der Technik, verbesserte elektrische Betriebseigenschaften zu erreichen, wird vorgeschlagen, dass die Statorwicklung (20) als Bruchlochwicklung ausgeführt ist.

FIG 3

**Beschreibung**

Die Erfindung betrifft einen Stator für eine elektrische rotierende Maschine, wobei der Stator Statornuten aufweist, in denen eine Statorwicklung mit redundanten und zumindest dreiphasigen Wicklungssystemen verlegt ist.

Darüber hinaus betrifft die Erfindung eine elektrische rotierende Maschine mit mindestens einem derartigen Stator.

Ferner betrifft die Erfindung ein Wasserfahrzeug, insbesondere Schiff, mit mindestens einer derartigen elektrischen rotierenden Maschine.

Derartige elektrische rotierende Maschinen, insbesondere mit einer Leistung von mindestens einem Megawatt, werden insbesondere in Wasserfahrzeugen, beispielsweise in Schiffen und Unterseebooten eingesetzt. Derartige Antriebe für Wasserfahrzeuge werden häufig bei geringen Drehzahlen betrieben und sind hochpolig, beispielsweise mit mindestens zehn Polen, ausgeführt. Bei Wasserfahrzeugen besteht die Forderung nach einer Redundanz des Antriebs, sodass bei einem Ausfall, beispielsweise eines Umrichters, oder bei einem Schaden, beispielsweise innerhalb einer Wicklung, der Antrieb, zumindest mit verminderter Leistung, betrieben werden kann, um beispielsweise die Manövrierfähigkeit des Schiffes zu gewährleisten. Eine Redundanz wird innerhalb eines Antriebsmotors durch mindestens zwei getrennte Wicklungssysteme hergestellt, die jeweils von einem eigenen Umrichter betrieben werden. Die getrennten Wicklungssysteme müssen so ausgeführt sein, dass sich sowohl in einem Betrieb mit nur einem System als auch in einem Betrieb mit allen Systemen ein Magnetfeld mit der richtigen Polzahl und einer guten Feldverteilung möglichst oberwellenarm ausbildet. Ferner muss das Überkoppeln zwischen den Wicklungssystemen möglichst gering sein, damit sich die Wicklungssysteme, insbesondere um einen ungestörten Umrichterbetrieb zu ermöglichen, nicht gegenseitig beeinflussen.

Die Patentschrift EP 2 016 661 B1 beschreibt eine elektrische Maschine, die einen Stator und einen Rotor aufweist, wobei der Stator Statornuten aufweist, in denen eine Statorwicklung mit redundanten und zumindest dreiphasigen Wicklungssystemen verlegt ist. Die elektrische Maschine weist eine Vielzahl von Polen mit einer Polzahl von mindestens vier, eine Anzahl von Statornuten, die dem Produkt aus einer Phasenzahl und dem Quadrat der Polzahl der elektrischen Maschine oder einem ganzzahligen Vielfachen davon entspricht, sowie eine der Polzahl entsprechende Anzahl von Wicklungssystemen auf. Jeweils eine der Polzahl entsprechende Anzahl von phasengleichen Strängen sind zu einer Phasenstranggruppe zusammengefasst. Die Phasenstranggruppen sind phasenzyklisch und Pol für Pol in den Statornuten des Stators verlegt. Je Pol und Phasenstranggruppe ist jeweils ein der Polzahl entsprechender Nutbereich vorhanden. Die Nutbelegung erfolgt so, dass die phasengleichen Stränge entsprechend ihrer Nummerierung gleichmäßig auf die Nutpositionen der zugehörigen Nutbereiche verteilt sind.

Die Offenlegungsschrift WO 2007/141230 A1 beschreibt einen Wechselstromgenerator für Kraftfahrzeuge mit einem Rotor, dessen Pole als Klauenpole ausgebildet sind. Zur Verbesserung der Gestaltungsmöglichkeiten des Stators der Maschine wird dessen mehrphasige Wicklung als Bruchlochwicklung ausgeführt, wodurch insbesondere hinsichtlich der Auswahl der Nutenzahl viele zusätzliche Möglichkeiten geschaffen werden, durch welche sowohl die Fertigung deutlich vereinfacht und verbilligt als auch gleichzeitig die elektrischen Eigenschaften verbessert werden können.

Der Erfindung liegt die Aufgabe zugrunde, einen Stator für eine elektrische rotierende Maschine mit redundanten Wicklungssystemen bereitzustellen, der, im Vergleich zum Stand der Technik, verbesserte elektrische Betriebseigenschaften aufweist.

Diese Aufgabe wird erfindungsgemäß durch einen Stator der eingangs genannten Art gelöst, wobei die Statorwicklung als Bruchlochwicklung ausgeführt ist.

Darüber hinaus wird die Aufgabe erfindungsgemäß durch eine elektrische rotierende Maschine mit mindestens einem derartigen Stator gelöst.

Ferner wird die Aufgabe erfindungsgemäß durch ein Wasserfahrzeug, insbesondere Schiff, mit mindestens einer derartigen elektrischen rotierenden Maschine gelöst.

Die in Bezug auf den Stator nachstehend angeführten Vorteile und bevorzugten Ausgestaltungen lassen sich sinngemäß auf die elektrische rotierende Maschine und das Wasserfahrzeug übertragen.

Der Erfindung liegt die Überlegung zugrunde, die elektrische Performance, insbesondere den Feldverlauf und das Überkoppeln zwischen den redundanten Wicklungssystemen zu verbessern. Dies wird erreicht, indem die Statorwicklung als Bruchlochwicklung ausgeführt ist. Bei einer Bruchlochwicklung ist eine Lochzahl, die sich aus dem Quotienten einer Nutzahl des Stators, dividiert durch das Produkt aus einer Polzahl 2p und einer Phasenzahl berechnet, keine ganze Zahl sondern eine Bruchzahl. Durch eine Bruchlochwicklung ergibt sich eine größere Flexibilität hinsichtlich der Nutzahl des Stators, sodass sich mehr Freiheitsgrade hinsichtlich einer Optimierung der Wicklungssysteme, beispielsweise um ein geringes Überkoppeln und/oder ein verbessertes Feldspektrum zu erreichen, ergeben. Im Vergleich zu ganzzahligen Lochzahlen werden insbesondere elektrische Nachteile bei der Auslegung und Herstellung der Wicklungssysteme zumindest deutlich reduziert.

In einer bevorzugten Ausgestaltung ist die Statorwicklung als Zweischichtwicklung ausgeführt, wobei in jeder der Statornuten Spulen desselben Wicklungssystems angeordnet sind. Bei einer Zweischichtwicklung weisen die Spulen des Stators eine gleichmäßige Form auf und sind, insbesondere bei einer Ausführung als Formspulen, günstiger herzustellen. Ferner sind bei einer Zweischichtwicklung beliebige Sehnungen und Zonenänderungen ausführbar. Beispielsweise wird bei einer 5/6 Sehnung eine Unterdrückung der 5. und 7. Harmonischen erzielt. Da in jeder der Statornuten Spulen desselben Wicklungssystems angeordnet sind, wird das Überkoppeln zwischen den Wicklungssystemen minimiert, was zu einer Verbesserung der Regelungseigenschaften bei einer Regelung in den Umrichtern, führt.

In einer weiteren vorteilhaften Ausführungsform sind in den jeweils benachbarten Statornuten jeder Statornut Spulen eines weiteren Wicklungssystems angeordnet. Insbesondere sind die Statornuten alternierend von Spulen des ersten Wicklungssystems und des zweiten Wicklungssystems besetzt. Eine derartige Anordnung der Spulen der jeweiligen Wicklungssysteme wirkt sich positiv auf das Überkoppeln und auf den Feldverlauf aus.

Besonders vorteilhaft sind in einer ersten Statornut zwei Spulen einer ersten Phase angeordnet, wobei in einer der ersten Statornut benachbarten zweiten Statornut eine erste Spule der ersten Phase und eine zweite Spule einer zweiten Phase angeordnet sind und wobei in einer der zweiten Statornut benachbarten dritten Statornut zwei Spulen der zweiten Phase angeordnet sind. Da den Spulen der jeweiligen Phasen jeweils unterschiedliche Wicklungssysteme zuordenbar sind, bietet die Beschaltung eine große Flexibilität hinsichtlich einer Optimierung, beispielsweise bezüglich des Überkoppelns und des Feldverlaufs.

In einer vorteilhaften Ausführungsform sind in der ersten Statornut und in der dritten Statornut Spulen des ersten Wicklungssystems angeordnet, wobei in der zweiten Statornut Spulen des zweiten Wicklungssystems angeordnet sind. Eine derartige alternierende Belegung der Statornuten führt zu einer Verringerung des Überkoppelns zwischen den Wicklungssystemen.

In einer bevorzugten Ausgestaltung sind eine Stromrichtung der Ströme durch die Spulen der ersten Statornut und der ersten Spule der zweiten Statornut gleich, wobei die Stromrichtungen der Ströme durch die Spulen der dritten Statornut und der zweiten Spule der zweiten Statornut entgegengesetzt sind. Derartige Stromrichtungen sind hinsichtlich des Überkoppelns und des Feldverlaufs optimal.

Vorteilhaft sind in einer vierten Statornut zwei Spulen einer dritten Phase angeordnet, wobei in einer der vierten Statornut benachbarten fünften Statornut eine erste Spule der dritten Phase und eine zweite Spule einer ersten Phase angeordnet sind und wobei in einer der fünften Statornut benachbarten sechsten Statornut zwei Spulen der ersten Phase angeordnet. Ferner bietet die Beschaltung eine große Flexibilität hinsichtlich einer Optimierung, beispielsweise bezüglich des Überkoppelns und des Feldverlaufs, da den Spulen der jeweiligen Phasen jeweils unterschiedliche Wicklungssysteme zuordenbar sind.

In einer vorteilhaften Ausführungsform sind in der vierten Statornut und in der sechsten Statornut Spulen des zweiten Wicklungssystems angeordnet, wobei in der fünften Statornut Spulen des ersten Wicklungssystems angeordnet sind. Durch eine derartige alternierende Belegung der Statornuten wird eine Verringerung des Überkoppelns zwischen den Wicklungssystemen erreicht.

Vorteilhaft sind in einer siebten Statornut zwei Spulen einer zweiten Phase angeordnet, wobei in einer der siebten Statornut benachbarten achten Statornut eine erste Spule der zweiten Phase und eine zweite Spule einer dritten Phase angeordnet sind und wobei in einer der achten Statornut benachbarten neunten Statornut zwei Spulen der dritten Phase angeordnet sind. Diese Phasenzuordnung ist auch bei hohen Nutzahlen ausreichend übersichtlich. Darüber hinaus ist die Beschaltung flexibel hinsichtlich einer Optimierung durch eine variable Zuordnung unterschiedlicher Wicklungssysteme.

In einer vorteilhaften Ausführungsform sind in der siebten Statornut und in der neunten Statornut Spulen des ersten Wicklungssystems angeordnet, wobei in der achten Statornut Spulen des zweiten Wicklungssystems angeordnet sind. Durch eine derartige alternierende Belegung der Statornuten wird eine Verringerung des Überkoppelns zwischen den Wicklungssystemen erreicht.

In einer bevorzugten Ausgestaltung weist die Statorwicklung eine Nutzahl zwischen 50 und 150 auf. Eine derartige Nutzahl ermöglicht insbesondere unter fertigungstechnischen Gesichtspunkten einen besonders vorteilhaften Aufbau der elektrischen rotierenden Maschine, wobei die maximal sinnvolle Nutzahl abhängig von einem Innendurchmesser des Stators ist. Die maximal sinnvolle Nutzahl ist bestimmt durch fertigungstechnische Schwierigkeiten bei der Herstellung der Nuten sowie durch Probleme beim Einbringen der Spulen in die Nuten. Die minimale geeignete Nutzahl ergibt sich durch einen größeren Oberwellengehalt in der resultierenden Feldkurve des Generators und hierdurch bedingte stärkere Abweichungen der Spannungskurve von der Sinusform und/oder durch höhere Verluste.

In einer bevorzugten Ausgestaltung beträgt die Lochzahl der Bruchlochwicklung 3/2. Grundsätzlich sollte die Lochzahl möglichst niedrig liegen, da eine zu große Lochzahl, insbesondere bei höherpoligen elektrischen rotierenden Maschinen, zu einer großen Nutzahl führt, was mit den bereits erwähnten fertigungstechnischen und wickeltechnischen Schwierigkeiten einhergeht. Die Untergrenze der Lochzahl ergibt sich ebenfalls aus der resultierenden Nutzahl, wobei eine zu niedrige Nutzahl zu einem hohen Oberwellengehalt im Luftspaltfeld führt.

Im Folgenden wird die Erfindung anhand der in den Figuren dargestellten Ausführungsbeispiele näher beschrieben und erläutert. Es zeigen:

FIG 1   einen Querschnitt einer elektrischen rotierenden Maschine,

FIG 2   einen vergrößerten Querschnitt eines Stators im Bereich einer Statorwicklung und

FIG 3   einen Nutbelegungsplan einer ersten Ausführungsform einer Statorwicklung,

FIG 4　　einen Nutbelegungsplan einer zweiten Ausführungsform einer Statorwicklung und

FIG 5　　ein Schiff mit einem Gondelantrieb.

Gleiche Bezugszeichen haben in den verschiedenen Figuren die gleiche Bedeutung.

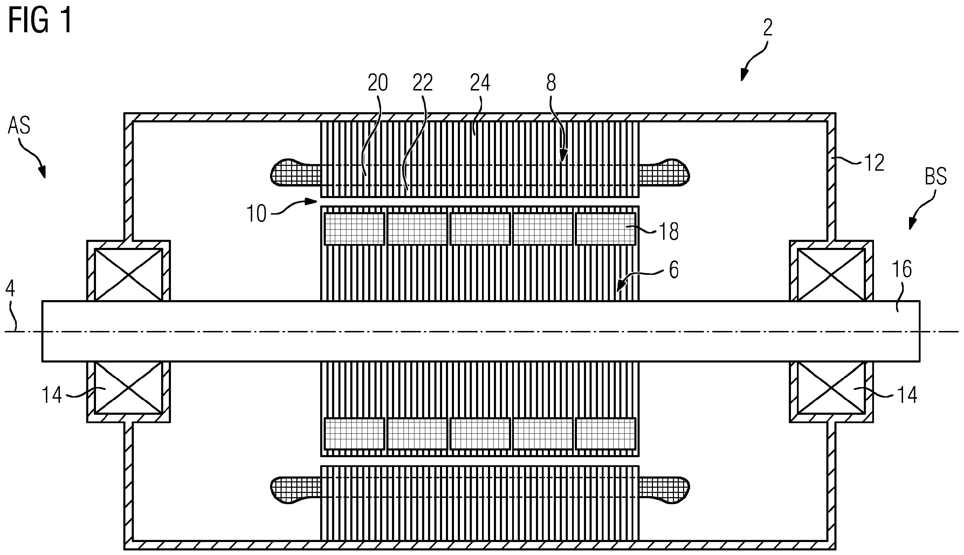

FIG 1 zeigt einen Querschnitt einer elektrischen rotierenden Maschine 2, welche als eine permanenterregte Synchronmaschine ausgeführt ist. Die permanenterregte Synchronmaschine ist beispielsweise dafür geeignet ein Schiff anzutreiben. Die elektrische rotierende Maschine 2 weist einen um eine Rotationsachse 4 rotierenden Rotor 6 und einen den Rotor 6 umgebenden Stator 8 auf, wobei der Rotor 6 vom Stator 8 durch einen Fluidspalt 10, insbesondere Luftspalt, getrennt ist. Der Rotor 6 und der Stator 8 sind insbesondere geblecht ausgeführt. Die elektrische rotierende Maschine 2 ist in einem Gehäuse 12 angeordnet, das an einer Antriebsseite AS und an einer Nicht-Antriebsseite BS jeweils ein Lager 14 hält. Der Rotor 6 umfasst darüber hinaus eine Welle 16, welche auf den Lagern 14 aufliegt. Der Rotor 6 weist eine Vielzahl von Permanentmagneten 18 auf. Alternativ werden die Pole des Rotors 6 durch Erregerspulen gebildet. Der Stator 8 weist eine Statorwicklung 20 auf, die in Statornuten 22 eines Statorblechpakets 24 verläuft. Die Statorwicklung 20 weist zwei getrennte redundante dreiphasige Wicklungssysteme auf, die jeweils von einem Umrichter (nicht in FIG 1 dargestellt) gespeist werden. Bei einem Ausfall beispielsweise eines Umrichters oder eines Schadens innerhalb eines der Wicklungssysteme wird die elektrische rotierende Maschine 2 mit verminderter Leistung betrieben.

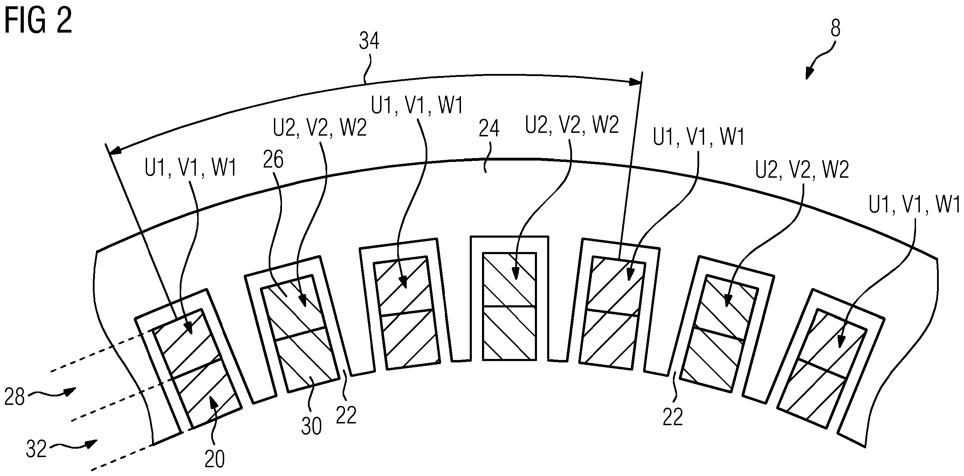

FIG 2 zeigt einen vergrößerten Querschnitt eines Stators 8 im Bereich einer Statorwicklung 20. Die Statorwicklung 20 ist als gesehnte Zweischichtwicklung ausgeführt, wobei zwei Spulen desselben Wicklungssystems U1, V1, W1; U2, V2, W2 in jeder Statornut 22 des Statorblechpakets 24 verlaufen. In den benachbarten Statornuten 22 sind Spulen eines weiteren Wicklungssystems U2, V2, W2; U1, V1, W1 angeordnet, sodass die Statornuten 22 alternierend von Spulen 26, 30 des ersten Wicklungssystems U1, V1, W1 und des zweiten Wicklungssystems U2, V2, W2 besetzt sind. Eine Spulenweite 34 der gesehnten Zweischichtwicklung beträgt vier Statornuten 22, sodass sich jeweils eine Spule von einer oberen Wicklungsschicht 28 einer Statornut 22 zu einer unteren Wicklungsschicht 32 einer exemplarisch im Uhrzeigersinn vier Statornuten 22 entfernten Statornut 22 erstreckt. Die Spulen 26, 30 sind beispielsweise als Formspulen ausgeführt. Die weitere Ausführung des Stators 8 entspricht der Ausführung in FIG 1.

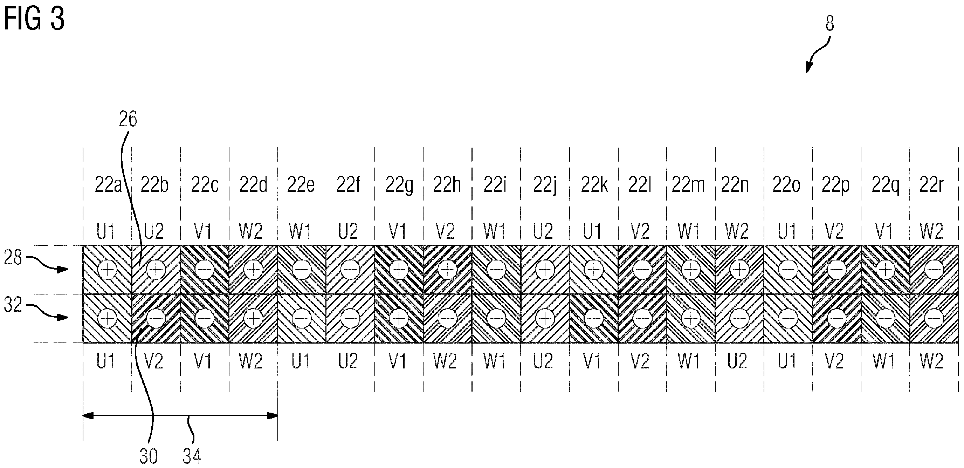

FIG 3 zeigt einen Nutbelegungsplan einer ersten Ausführungsform einer Statorwicklung 20. Die Statorwicklung 20 weist zwei redundante dreiphasige Wicklungssysteme U1, V1, W1; U2, V2, W2 auf, wobei jedes der beiden Wicklungssysteme U1, V1, W1; U2, V2, W2 geeignet ist, von einem eigenen Umrichter (nicht in FIG 3 dargestellt) gespeist zu werden. Die Statorwicklung 20 ist als Bruchlochwicklung ausgeführt. Eine Bruchlochwicklung weist eine Lochzahl q als Quotient aus der Nutzahl N, dividiert durch die Polzahl 2p und die Phasenzahl m auf, welche keine ganze Zahl sondern eine Bruchzahl ist:

$$q = \frac{N}{2p \cdot m}$$

Exemplarisch weist die Statorwicklung 20 in FIG 3 eine Lochzahl q=3/2 auf. Der gesamte Stator 8 umfasst beispielhaft 90 Nuten, wobei der Nutbelegungsplan für die in FIG 3 gezeigten 18 Statornuten 22a-22r fünf Mal fortgesetzt wird. In jeder der Statornuten 22a-22r sind Spulen 26, 30 desselben Wicklungssystems U1, V1, W1; U2, V2, W2 angeordnet, wobei die Statornuten 22a-22r alternierend von Spulen 26, 30 des ersten Wicklungssystems U1, V1, W1 und des zweiten Wicklungssystems U2, V2, W2 besetzt sind. Die Spulenweite 34 beträgt, wie in FIG 2, beispielhaft vier Statornuten, d.h., die untere Wicklungsschicht 32 ist gegenüber der oberen Wicklungsschicht 28 um vier Nuten versetzt.

In einer ersten Statornut 22a sind zwei Spulen 26, 30 einer ersten Phase U1 des ersten Wicklungssystems U1, V1, W1 angeordnet. In einer der ersten Statornut 22a benachbarten zweiten Statornut 22b sind eine erste Spule 26 einer ersten Phase U2 des zweiten Wicklungssystems U2, V2, W2 und eine zweite Spule 30 einer zweiten Phase V2 des zweiten Wicklungssystems U2, V2, W2 angeordnet. In einer der zweiten Statornut 22b benachbarten dritten Statornut 22c sind zwei Spulen 26, 30 einer zweiten Phase V1 des ersten Wicklungssystems U1, V1, W1 angeordnet.

Die Stromrichtungen der Ströme durch die Spulen 26, 30 der ersten Statornut 22a und der ersten Spule 26 der zweiten Statornut 22b sind gleich. Die Stromrichtungen der Ströme durch die Spulen 26, 30 der dritten Statornut 22c und der zweiten Spule 30 der zweiten Statornut 22b sind dem entgegengesetzt.

In einer vierten Statornut 22d sind zwei Spulen 26, 30 einer dritten Phase W2 des zweiten Wicklungssystems U2, V2, W2 angeordnet. In einer der vierten Statornut 22d benachbarten fünften Statornut 22e sind eine erste Spule 26 einer dritten Phase W1 des ersten Wicklungssystems U1, V1, W1 und eine zweite Spule 30 der ersten Phase U1 des ersten Wicklungssystems U1, V1, W1 angeordnet. In einer der fünften Statornut 22e benachbarten sechsten Statornut 22f sind zwei Spulen 26, 30 der ersten Phase U2 des zweiten Wicklungssystems U2, V2, W2 angeordnet.

In einer siebten Statornut 22g sind zwei Spulen 26, 30 der zweiten Phase V1 des ersten Wicklungssystems U1, V1, W1 angeordnet. In einer der siebten Statornut 22g benachbarten achten Statornut 22h sind eine erste Spule 26 einer zweiten Phase V2 des zweiten Wicklungssystems U2, V2, W2 und eine zweite Spule 30 der dritten Phase W2 des zweiten Wicklungssystems U2, V2, W2 angeordnet. In einer der achten Statornut 22h benachbarten neunten Statornut 22i sind zwei Spulen 26, 30 der dritten Phase W1 des ersten Wicklungssystems U1, V1, W1 angeordnet.

Die Belegung der zehnten bis achtzehnten Statornut 22j-22r entspricht der Belegung der ersten bis neunten Statornut 22a-22i, wobei jedoch die Wicklungssysteme vertauscht sind, das heißt beispielsweise befinden sich in der ersten Statornut 22a Spulen 26, 30 der ersten Phase U1 des ersten Wicklungssystems U1, V1, W1 und in der zehnten Statornut 22j Spulen 26, 30 der ersten Phase U2 des zweiten Wicklungssystems U2, V2, W2.

Mit dem in FIG 3 gezeigten Nutbelegungsplan werden eine gute Feldverteilung, auch bei einer Speisung nur eines der Wicklungssysteme U1, V1, W1; U2, V2, W2, und eine optimale Entkopplung der Wicklungssysteme U1, V1, W1; U2, V2, W2 zueinander erreicht. Die Bruchlochwicklung sorgt dafür, dass sich das Schaltschema erst nach 4 magnetischen Polen wiederholt. Die weitere Ausführung der Statorwicklung 20 entspricht der Ausführung in FIG 2.

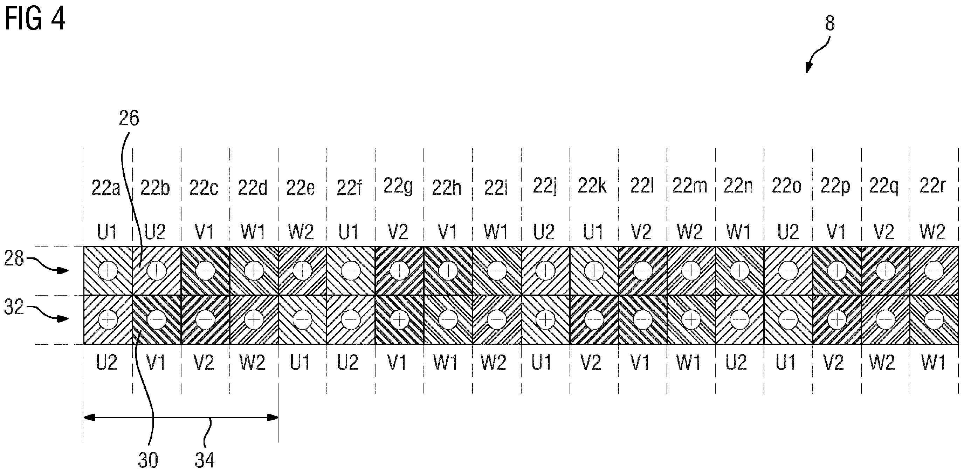

FIG 4 zeigt einen Nutbelegungsplan einer zweiten Ausführungsform einer Statorwicklung 20. Die Statorwicklung 20 weist, wie in FIG 3, zwei redundante dreiphasige Wicklungssysteme U1, V1, W1; U2, V2, W2 auf und die Statorwicklung 20 ist als Bruchlochwicklung mit einer Lochzahl q=3/2 ausgeführt. Mit dem in FIG 4 gezeigten Nutbelegungsplan wird ein günstiges Verhalten in Bezug auf Oberwellen erzielt. Die weitere Ausführung der Statorwicklung 20 entspricht der Ausführung in FIG 3.

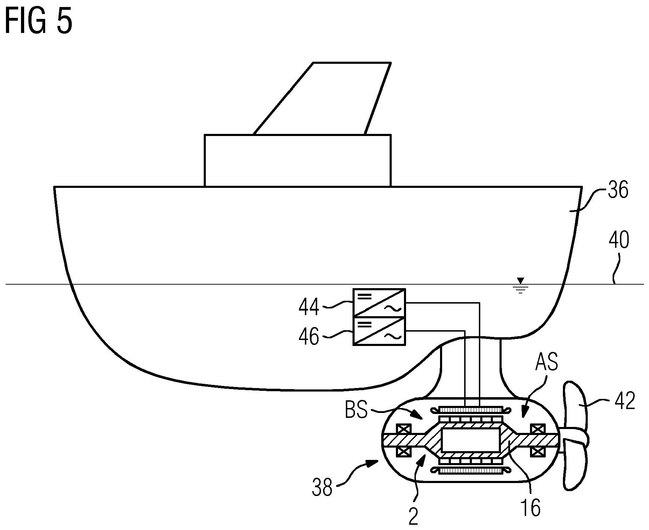

FIG 5 zeigt ein Wasserfahrzeug 36, das als Schiff ausgeführt ist, mit einem Gondelantrieb 38. Der Gondelantrieb 38 befindet sich unter einer Wasseroberfläche 40 und weist eine elektrische rotierende Maschine 2 und einen Propeller 42 auf, wobei der Propeller 42 über die Welle 16 an der Antriebsseite AS mit der elektrischen rotierenden Maschine 2 verbunden ist. Der Stator 8 der elektrischen rotierenden Maschine 2 weist eine Statorwicklung 20 mit zwei redundanten dreiphasigen Wicklungssystemen U1, V1, W1; U2, V2, W2, wie in den vorherigen Figuren dargestellt, auf, die jeweils von einem Umrichter 44, 46 gespeist werden.

Zusammenfassend betrifft die Erfindung einen Stator 8 für eine elektrische rotierende Maschine 2, wobei der Stator 8 Statornuten 22 aufweist, in denen eine Statorwicklung 20 mit redundanten und zumindest dreiphasigen Wicklungssystemen U1, V1, W1; U2, V2, W2 verlegt ist. Um, im Vergleich zum Stand der Technik, verbesserte elektrische Betriebseigenschaften zu erreichen, wird vorgeschlagen, dass die Statorwicklung 20 als Bruchlochwicklung ausgeführt ist.

**Patentansprüche**

1. Stator (8) für eine elektrische rotierende Maschine (2), wobei der Stator (8) Statornuten (22) aufweist, in denen eine Statorwicklung (20) mit redundanten und zumindest dreiphasigen Wicklungssystemen (U1,V1,W1; U2,V2,W2) verlegt ist, **dadurch gekennzeichnet, dass** die Statorwicklung (20) als Bruchlochwicklung ausgeführt ist.

2. Stator (8) nach Anspruch 1, wobei die Statorwicklung (20) als Zweischichtwicklung ausgeführt ist, wobei in jeder der Statornuten (22) Spulen (26,30) desselben Wicklungssystems (U1,V1,W1; U2,V2,W2) angeordnet sind.

3. Stator (8) nach einem der Ansprüche 1 oder 2, wobei in den jeweils benachbarten Statornuten (22) jeder Statornut (22) Spulen (26,30) eines weiteren Wicklungssystems (U1,V1,W1; U2,V2,W2) angeordnet sind.

4. Stator (8) nach einem der vorherigen Ansprüche, wobei in einer ersten Statornut (22a) zwei Spulen (26,30) einer ersten Phase (U1,U2) angeordnet sind, wobei in einer der ersten Statornut (22a) benachbarten zweiten Statornut (22b) eine erste Spule (26) der ersten Phase (U1,U2) und eine zweite Spule (30) einer zweiten Phase (V1,V2) angeordnet sind und wobei in einer der zweiten Statornut (22b) benachbarten dritten Statornut (22c) zwei Spulen (26,30) der zweiten Phase angeordnet (V1,V2) sind.

5. Stator (8) nach Anspruch 4, wobei in der ersten Statornut (22a) und in der dritten Statornut (22c) Spulen (26,30) des ersten Wicklungssystems (U1,V1,W1) angeordnet sind und wobei in der zweiten Statornut (22b) Spulen (26,30) des zweiten Wicklungssystems (U2,V2,W2) angeordnet sind.

6. Stator (8) nach einem der Ansprüche 4 oder 5, wobei eine Stromrichtung der Ströme durch die Spulen (26,30) der ersten Statornut (22a) und der ersten Spule (26) der zweiten Statornut (22b) gleich sind und wobei die Stromrichtungen der Ströme durch die Spulen (26,30) der dritten Statornut (22c) und der zweiten Spule (30) der zweiten Statornut (22b) entgegengesetzt sind.

7. Stator (8) nach einem der Ansprüche 4 bis 6, wobei in einer vierten Statornut (22d) zwei Spulen (26,30) einer dritten Phase (W1,W2) angeordnet sind, wobei in einer der vierten Statornut (22d) benachbarten fünften Statornut (22e) eine erste Spule (26) der dritten Phase (W1,W2) und eine zweite Spule (30) einer ersten Phase (U1,U2) angeordnet sind und wobei in einer der fünften Statornut (22e) benachbarten sechsten Statornut (22f) zwei Spulen (26,30) der ersten Phase (U1, U2) angeordnet sind.

8. Stator (8) nach Anspruch 7, wobei in der vierten Statornut (22d) und in der sechsten Statornut (22f) Spulen (26,30) des zweiten Wicklungssystems (U2,V2,W2) angeordnet sind und wobei in der fünften Statornut (22e) Spulen (26,30) des ersten Wicklungssystems (U1,V1,W1) angeordnet sind.

9. Stator (8) nach einem der Ansprüche 4 bis 8, wobei in einer siebten Statornut (22g) zwei Spulen (26,30) einer zweiten Phase (V1,V2) angeordnet sind, wobei in einer der siebten Statornut (22g) benachbarten achten Statornut (22h) eine erste Spule (26) der zweiten Phase (V1,V2) und eine zweite Spule (30) einer dritten Phase (W1,W2) angeordnet sind und wobei in einer der achten Statornut (22h) benachbarten neunten Statornut (22i) zwei Spulen (26,30) der dritten Phase (W1,W2) angeordnet sind.

10. Stator (8) nach Anspruch 9, wobei in der siebten Statornut (22g) und in der neunten Statornut (22i) Spulen (26,30) des ersten Wicklungssystems (U1,V1,W1) angeordnet sind und wobei in der achten Statornut (22h) Spulen (26,30) des zweiten Wicklungssystems (U2,V2,W2) angeordnet sind.

11. Stator (8) nach einem der vorherigen Ansprüche, wobei die Statorwicklung (20) eine Nutzahl (N) zwischen 50 und 150 aufweist.

12. Stator (8) nach einem der vorherigen Ansprüche, wobei die Lochzahl (q) der Bruchlochwicklung 3/2 beträgt.

13. Elektrische rotierende Maschine (2) mit mindestens einem Stator (8) nach einem der Ansprüche 1 bis 12.

14. Wasserfahrzeug (36), insbesondere Schiff, mit mindestens einer elektrischen rotierenden Maschine (2) nach Anspruch 13.

FIG 1

EP 3 396 815 A1

FIG 2

34

8

U2, V2, W2
U1, V1, W1
24
U2, V2, W2
U1, V1, W1
U2, V2, W2
U1, V1, W1

U1, V1, W1
26

28

32

20

30
22

22

EP 3 396 815 A1

8

FIG 3

EP 3 396 815 A1

8

26

| 22a | 22b | 22c | 22d | 22e | 22f | 22g | 22h | 22i | 22j | 22k | 22l | 22m | 22n | 22o | 22p | 22q | 22r |
|-----|-----|-----|-----|-----|-----|-----|-----|-----|-----|-----|-----|-----|-----|-----|-----|-----|-----|
| U1 | U2 | V1 | W2 | W1 | U2 | V1 | V2 | W1 | U2 | U1 | V2 | W1 | W2 | U1 | V2 | V1 | W2 |

28 →

32 →

| U1 | V2 | V1 | W2 | U1 | U2 | V1 | W2 | W1 | U2 | V1 | V2 | W1 | U2 | U1 | V2 | W1 | W2 |

30   34

FIG 4

# FIG 5

Europäisches
Patentamt

European
Patent Office

Office européen
des brevets

**EUROPÄISCHER RECHERCHENBERICHT**

Nummer der Anmeldung

EP 17 16 8384

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | GB 2 508 416 A (UNIV SHEFFIELD [GB]) 4. Juni 2014 (2014-06-04) | 1,2, 4-11,13, 14 | INV. H02K3/28 |
| Y | * Seite 4, Zeile 33 - Seite 5, Zeile 24 * * Seite 10, Zeile 15 - Seite 11, Zeile 15 * * Abbildungen 3, 8 * ----- | 3,12 | ADD. H02K1/16 |
| Y | DE 10 2006 021354 A1 (SIEMENS AG [DE]) 15. November 2007 (2007-11-15) * Zusammenfassung * * Abbildungen 3, 4, 6 * ----- | 3 | |
| Y | DE 10 2006 024520 A1 (UNIV BERLIN TECH [DE]) 29. November 2007 (2007-11-29) * Absatz [0015] * ----- | 12 | |
| A | WO 2016/127147 A1 (UNIV MINNESOTA [US]) 11. August 2016 (2016-08-11) * Abbildung 2B * ----- | 1 | |

RECHERCHIERTE
SACHGEBIETE (IPC)

H02K

Der vorliegende Recherchenbericht wurde für alle Patentansprüche erstellt

| Recherchenort | Abschlußdatum der Recherche | Prüfer |
|---|---|---|
| Den Haag | 21. Juni 2017 | Dragojlovic, Djordje |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 17 16 8384

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-06-2017

| Im Recherchenbericht angeführtes Patentdokument | Datum der Veröffentlichung | Mitglied(er) der Patentfamilie | Datum der Veröffentlichung |
|---|---|---|---|
| GB 2508416 A | 04-06-2014 | CA 2893282 A1<br>CN 104969448 A<br>EP 2926440 A2<br>GB 2508416 A<br>JP 2016502392 A<br>KR 20150114941 A<br>US 2015311758 A1<br>WO 2014083352 A2 | 05-06-2014<br>07-10-2015<br>07-10-2015<br>04-06-2014<br>21-01-2016<br>13-10-2015<br>29-10-2015<br>05-06-2014 |
| DE 102006021354 A1 | 15-11-2007 | AT 447253 T<br>AU 2007247216 A1<br>CN 101356708 A<br>DE 102006021354 A1<br>EP 2016661 A1<br>NO 337362 B1<br>US 2008272669 A1<br>WO 2007128747 A1 | 15-11-2009<br>15-11-2007<br>28-01-2009<br>15-11-2007<br>21-01-2009<br>29-03-2016<br>06-11-2008<br>15-11-2007 |
| DE 102006024520 A1 | 29-11-2007 | KEINE | |
| WO 2016127147 A1 | 11-08-2016 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2016661 B1
- WO 2007141230 A1